# FASCICULE DE BREVET EUROPEEN

(11) **EP 0 742 316 B1**
(45) Date de publication et mention de la délivrance du brevet: **11.07.2001**
(21) Numéro de dépôt: 96400988.0
(22) Date de dépôt: 09.05.1996
(51) Int. Cl.: D21H 17/29, C08B 31/16, C08B 31/18, C08B 31/04, C09J 103/04

(54) **Composition et procédé pour le collage du papier**
Zusammensetzung und Verfahren zur Papierleimung
Composition and process for sizing paper

(30) Priorité: 12.05.1995 FR 9505665
(43) Date de publication de la demande: 13.11.1996
(73) Titulaire: ROQUETTE FRERES, 62136 Lestrem (FR)
(72) Inventeur: Fuertes, Patrick, 59130 Lambersart (FR); Lambin, Anne née Delmotte, 59160 Lomme (FR); Dreux, Jean-Louis, 59940 Estaires (FR)
(74) Mandataire: Boulinguiez, Didier

(56) Documents cités:
- EP-A- 0 188 237
- EP-A- 0 350 668
- EP-A- 0 620 315
- GB-A- 2 137 613
- US-A- 2 661 349

## Description

L'invention a pour objet de nouveaux dérivés de polysaccharides cationiques estérifiés par un anhydride d'acide dicarboxylique substitué par une chaîne carbonée, ainsi que des utilisations de ces dérivés.

Plus particulièrement, l'invention a pour objet une nouvelle composition pour le collage du papier ou du carton, les termes "papier" et "carton" désignant dans ce qui suit toute structure plane ou feuille, de dimensions et épaisseur variables, non seulement à base de fibres cellulosiques - matière première la plus fréquemment utilisée dans l'industrie du papier et du carton - mais également à base :
- de fibres synthétiques telles que les fibres de polyamides, de polyesters et de résines polyacryliques,
- de fibres minérales telles que les fibres d'amiante, de céramique et de verre,
- de toutes combinaisons de fibres cellulosiques, synthétiques et minérales.

La composition selon l'invention est applicable, entre autres, à tout papier pour impression et/ou écriture.

La composition selon l'invention est également applicable au collage d'autres structures planes ou feuilles que celles susmentionnées, et notamment au collage de feuilles ou films de nature non fibreuse et de dimensions, épaisseur et caractéristiques (résistance, souplesse, etc...) variables.

D'une manière générale la notion de "structure plane" ou de "feuille" n'est aucunement limitative, notamment quant à la nature organique (par exemple polysaccharidique), synthétique (par exemple polyoléfinique) et/ou minérale de son ou ses constituant(s). Cette notion englobe, à titre purement informatif, des plaques ou lattes à base de bois, de carton et/ou de papier, destinées, entre autres, à la fabrication de sommiers ou de palettes repulpables.

Elle englobe également des films de polyéthylène destinées, entre autres, à l'impression jet d'encre.

La présente invention vise également un nouveau procédé de collage du papier et du carton mettant en oeuvre ladite composition. Le terme "collage" doit ici être entendu comme comprenant aussi bien tout collage appliqué au sein de la totalité de la masse fibreuse, c'est-à-dire tout collage interne, ladite composition étant ainsi répartie dans la masse constitutive de la structure plane résultante, que tout collage externe (également appelé surfaçage, encollage ou enduction), ladite composition étant ainsi principalement ou totalement appliquée ou retenue au niveau de l'une, au moins, des deux faces de la structure plane résultante.

Il est connu que les opérations de collage, notamment de surfaçage, mettant en oeuvre des compositions polysaccharidiques à caractère hydrophobe permettent de conférer aux papiers et cartons des propriétés améliorées, en particulier en termes de porosité, résistance à la pénétration de l'eau et des encres aqueuses.

La demande de brevet européen EP-A-350.668 décrit et revendique, en tant que composition de collage externe, une composition amylacée consistant en un mélange physique de 10 à 70 % (en poids) d'un amidon cationique non hydrophobe et de 30 à 90 % (en poids) d'un amidon hydrophobe non cationique de type particulier, en l'occurrence d'un monoester d'amidon obtenu par traitement au moyen d'un anhydride alcénylsuccinique. En fait, les exemples de ce document décrivent tous la mise en oeuvre, en tant qu'amidon hydrophobe, d'un amidon estérifié par l'anhydride 1-octénylsuccinique ("OSA"), anhydride dont le substituant hydrophobe est un alcène à chaîne linéaire (appelée également chaîne "normale" ou "n-") à 8 carbones.

GB-A-2 137 613 décrit des compositions pour le collage du papier comprenant des anhydrides dicarboxyliques substitués par une chaîne alkyle ramifiée. Les compositions sont stabilisées par de l'amidon cationique.

Les documents EP-A-188 237 (cf. tableau VII, exemples J-L) et US-A-2 661 349 (exemple IV) divulgant de l'amidon (non cationisé) estérifié par des anhydrides à chaîne alkyle ramifiée.

Selon les enseignements de la demande de brevet subséquente EP-A-620.315, de tels mélanges physiques amidon cationique / amidon n-octénylsuccinylé constitueraient des compositions de collage externe efficaces mais poseraient des problèmes de mauvaise rétention au niveau des fibres, et donc de pollution, lorsque les papiers encollés obtenus sont repulpés et recyclés.

En suite de quoi ladite demande de brevet EP-A-620.315 revendique l'utilisation, comme agents de collage interne ou externe, d'amidons substitués à la fois par des groupements cationiques et par des groupements n-alcénylsuccinylés.

On notera cependant que les exemples décrits dans la demande EP-A-620.315 :
- n'envisagent véritablement que la seule mise en oeuvre d'amidons cationiques substitués par des groupements (linéaires) n-octénylsuccinylés,
- n'envisagent véritablement que le seul collage externe du papier par de tels amidons cationiques n-octénylsuccinylés, et
- ne comparent pas véritablement, notamment en termes de porosité, d'absorption d'eau et de qualité en impression jet d'encre (encre noire), les caractéristiques de papiers respectivement encollés par un mélange physique d'un amidon cationique et d'un amidon hydrophobe n-octénylsuccinylé et encollés par un amidon disubstitué (groupements cationiques + groupements n-octénylsuccinylés).

Il apparait, en outre, que les amidons disubstitués spécifiquement préconisés au niveau de la demande EP-A-620.315 ne répondent pas totalement à l'ensemble des exigences actuelles de la pratique. "

En particulier, de tels amidons cationiques substitués par des groupements linéaires alcénylsuccinylés ne permettent pas toujours d'atteindre, au niveau des produits finis, des caractéristiques de porosité et/ou d'imprimabilité totalement satisfaisantes compte tenu des cahiers des charges toujours plus contraignants imposés par le marché.

A titre d'exemples, les papetiers sont amenés, du fait des exigences toujours plus marquées de leur clientèle, à rechercher des moyens permettant d'abaisser encore la porosité de papiers de type "enveloppe" ou de type "impression" et des moyens aptes à améliorer encore l'imprimabilité de papiers destinés aux techniques d'impression dites "sans impact" (impression jet d'encre, laser, photocopie, etc...) et notamment d'impression jet d'encre couleur.

Ainsi, les fabricants d'enveloppes demandent à ce que le papier dont ils disposent présente une porosité très basse afin que les dispositifs industriels automatisés de manutention, de pliage et de tri, par exemple des dispositifs de type "ventouse aspirante", permettent, à chaque stade de la fabrication, une séparation individualisée et rapide de chacun des articles (enveloppes) finis ou en cours d'élaboration.

En outre, le fait d'abaisser la porosité des papiers permet aux papetiers de réduire la drasticité, et donc le coût énergétique, des opérations de raffinage et des opérations subséquentes d'égouttage, et par là-même d'augmenter la vitesse machine et la productivité de leurs installations. Ces avantages s'accompagnent généralement d'un gain souhaité en rigidité du papier résultant.

Par ailleurs, le marché (activités industrielles, commerciales, publicitaires, etc...) est de plus en plus demandeur d'enveloppes présentant aussi une excellente imprimabilité et sur lesquelles peuvent être aisément imprimés, par exemple, des textes, slogans, logos ou autres signes distinctifs, de différentes couleurs.

Les vendeurs de papiers pour impression jet d'encre prêts à l'emploi et les fabricants d'imprimantes imposent par ailleurs des cahiers de charges extrêmement rigoureux aux fabricants de papiers, lesdits papiers devant présenter des caractéristiques sans cesse améliorées, notamment en termes d'intensité de coloration, de résistance à la migration du ou des colorants dans la profondeur, et a fortiori au verso de la feuille, de netteté de contours, de résistance au phénomène de dégorgement ou de fusion des couleurs ("bleeding"), de brillance, etc...

Une bonne intensité de coloration implique d'ailleurs que le papier pour impression jet d'encre présente, entre autres, une faible porosité assurant le maintien en surface du, ou des colorants.

Or, il apparait que les amidons disubstitués spécifiquement revendiqués dans la susdite demande EP-A-620.315, en particulier de type amidon cationique n-octénylsuccinylé, ne permettent pas d'atteindre les niveaux de porosité et/ou d'imprimabilité requis pour les papiers collés, notamment surfacés, les plus récemment développés sur le marché.

Il résulte de ce qui précède qu'il existe un besoin de trouver un moyen adapté aux exigences actuelles des techniques industrielles de préparation et de collage des papiers et cartons, permettant notamment l'obtention de feuilles ou autres structures planes présentant des caractéristiques de porosité et/ou d'imprimabilité améliorées. De telles propriétés améliorées sont, entre autres, souhaitées pour les feuilles de papiers pour impression et/ou écriture.

Et le mérite de la Société Demanderesse est d'avoir trouvé qu'un tel moyen pouvait être constitué par une composition contenant au moins un polysaccharide qui soit substitué à la fois par des groupements cationiques et par des dérivés particuliers d'anhydride d'acide dicarboxylique.

De façon plus précise, la présente invention a pour objet une composition pour le collage du papier et du carton contenant un polysaccharide cationique estérifié par un anhydride d'acide dicarboxylique, caractérisée en ce que ledit anhydride d'acide dicarboxylique est substitué par une chaîne carbonée, saturée ou non, de structure ramifiée.

Dans le cadre de la présente invention, on entend par "chaîne carbonée de structure ramifiée", un composé n'ayant pas l'ensemble de ses carbones en chaîne linéaire, contrairement aux composés alcényl dits "normaux" ou "n-" du type n- octényl, tels que ceux décrits dans la demande de brevet EP-A-620.315.

En suite de quoi, ladite chaîne carbonée, saturée ou non, présente au moins une ramification carbonée, étant entendu que conformément à l'invention, la localisation, la longueur (notamment le nombre de carbones) et la structure (y compris le niveau de saturation) de ladite ramification peuvent être très diverses comme il sera décrit plus précisément ci-après.

A titre indicatif, l'anhydride d'acide dicarboxylique porté par le polysaccharide contenu dans la composition pour collage selon l'invention, peut notamment être substitué par une chaîne carbonée, saturée ou non, présentant en un ou plusieurs endroits, y compris au niveau d'un même carbone, des ramifications alkylées, lesdites ramifications contenant de préférence de 1 à 5 atomes de carbone.

En suite de quoi, la composition pour collage du papier et du carton selon l'invention est caractérisée en ce que l'anhydride d'acide dicarboxylique est substitué par une chaîne carbonée, saturée ou non, ramifiée en au moins un endroit par au moins un groupement alkyle, contenant de préférence de 1 à 5 atomes de carbone.

Selon une variante plus préférentielle de la composition pour collage selon l'invention, ledit groupement alkyle est choisi parmi les groupements méthyle, éthyle, n-propyle, isopropyle, n-butyle, isobutyle, sec-butyle, tert-butyle, n-amyle ou isoamyle. De manière particulièrement avantageuse, le groupement alkyle est un groupement méthyle.

Selon une autre variante préférentielle de l'invention, la composition pour collage selon l'invention est caractérisée en ce que l'anhydride d'acide dicarboxylique est choisi parmi les anhydrides d'acide succinique, maléique, glutarique ou phtalique.

De manière particulièrement avantageuse, ledit anhydride consiste en l'anhydride succinique.

Une composition préférentielle pour collage du papier et du carton selon l'invention est caractérisée en ce que l'anhydride d'acide dicarboxylique est substitué par une chaîne carbonée de structure ramifiée, saturée ou non, contenant de 4 à 24 atomes de carbone, de préférence de 8 à 16 atomes de carbone.

Ladite chaîne carbonée peut notamment provenir d'un polymère, en particulier d'un dimère, trimère ou tétramère, du propylène ou de l'isobutylène.

De manière particulièrement avantageuse, ladite chaîne carbonée de structure ramifiée est une chaîne insaturée ou non, contenant 12 atomes de carbone.

La Société Demanderesse a notamment découvert que la composition pour collage du papier et du carton selon l'invention était particulièrement avantageuse lorsque l'anhydride dicarboxylique estérifiant le polysaccharide :
- consistait en l'anhydride succinique,
- et était substitué par une chaîne carbonée ramifiée, saturée ou non, comportant 12 atomes de carbone.

De tels anhydrides peuvent notamment consister en l'anhydride tétrapropénylsuccinique, dont la formule est reprise ci-dessous, et ceci quel que soit le mode de préparation et notamment quelles que soient l'origine, les conditions de synthèse et de fixation de la chaîne carbonée ramifiée qu'il comporte.

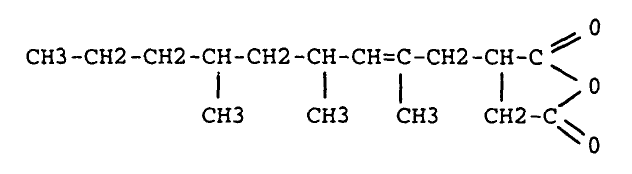

Une telle chaîne carbonée peut notamment résulter de la polymérisation du propylène ou de l'isobutylène.

De tels anhydrides peuvent également consister en tout isomère de l'anhydride tétrapropénylsuccinique, c'est-à-dire de tout anhydride succinique substitué par une chaîne carbonée ramifiée insaturée comprenant 12 atomes de carbone et ce, indépendamment du mode d'obtention et de la structure de ladite chaîne et notamment du nombre et de la localisation de toute ramification ou de toute double liaison C=C qu'elle contient, ainsi que de la longueur de toute ramification.

De tels anhydrides peuvent également consister en des anhydrides substitués par une chaîne carbonée ramifiée, saturée ou non, comportant 10 atomes de carbone tel que l'anhydride iso-décénylsuccinique ou l'un quelconque de ses isomères.

En suite de quoi la présente invention a, de façon préférentielle, pour objet une composition pour collage du papier et du carton contenant au moins un polysaccharide cationique estérifié par un anhydride d'acide dicarboxylique, caractérisée en ce que ledit anhydride est substitué par une chaîne carbonée ramifiée, saturée ou non, comportant de 8 à 16, de préférence 10 à 12, atomes de carbone et, de manière encore plus préférentielle, en ce que ledit anhydride consiste en l'anhydride tétrapropénylsuccinique, l'anhydride iso-décénylsuccinique ou l'un quelconque de leurs isomères respectifs.

Il est clair que tout polysaccharide cationique contenu dans la composition pour collage selon l'invention peut être estérifié par un mélange d'anhydrides d'acide dicarboxylique, chacun desdits anhydrides étant substitué par une chaîne carbonée ramifiée différente, cette différence pouvant porter sur le nombre et/ou la localisation des atomes de carbone et/ou de toute double liaison C=C éventuelle, de la chaîne carbonée ramifiée.

Au sens de la présente invention, on entend par "polysaccharide" et ce, sans que cette liste ne soit limitative, les produits choisis dans le groupe comprenant les amidons et autres polymères de glucose ou polyglucanes, les gommes telles que par exemple les gommes guar, les celluloses et hémicelluloses, les polymères de fructose ou polyfructanes tels que par exemple l'inuline, les polymères du xylose ou polyxylanes et les mélanges quelconques d'au moins deux quelconques desdits produits.

Le polysaccharide peut notamment être constitué d'un amidon ou d'une gomme guar, de préférence d'un amidon.

Les polysaccharides, en particulier les amidons, cationiques estérifiés mis en oeuvre au sein des compositions pour collage selon l'invention peuvent être préparés selon plusieurs variantes.

De façon préférentielle mais non obligatoire, cette préparation envisage l'étape de cationisation préalablement à l'étape d'estérification.

L'étape de cationisation peut être menée en milieu aqueux, en milieu solvant ou en phase sèche, de façon à permettre à un ou plusieurs groupement(s) azoté(s) de nature électropositive de se fixer sur les polysaccharides, et notamment sur les amidons ou les mélanges d'amidons de diverses natures et origines.

Lesdits groupements azotés peuvent notamment renfermer un atome d'azote tertiaire ou quaternaire comme les réactifs décrits dans les brevets suivants, déposés au nom de la Demanderesse :
- FR-B-2.434.821, en particulier de la page 3, ligne 29 à la page 5, ligne 10,
- EP-B-139.597, en particulier colonne 1, lignes 30 à 52, et
- EP-B1-282.415, en particulier page 4, lignes 5 à 36.

Les amidons cationiques préférentiellement utilisés dans le procédé selon l'invention peuvent notamment être préparés par l'une quelconque des techniques de cationisation, en particulier de cationisation en phase sèche, décrite dans FR-A-2.434.821, FR-A-2.477.159, EP-A-233.336, EP-A-303.039, EP-A-333.292, EP-A-406.837 et US-A-4.332.935.

Les amidons cationiques préférentiellement mis en oeuvre selon l'invention, qui présentent un niveau de cationisation non limitatif (par exemple un taux d'azote fixé de 0,04 à 3,0 % / poids sec d'amidon), peuvent d'ailleurs être de nature "polycationique" tels que ceux décrits dans EP-A-406.837.

De préférence, dans le cadre de l'invention, on met en oeuvre des amidons cationiques présentant un taux d'azote fixé d'environ 0,05 % à environ 1,5 %, de préférence de 0,05 à 1,0 %, et plus préférentiellement encore entre 0,09 % à 1,0 %, exprimé sur le poids sec de l'amidon.

Il convient d'insister sur le fait que les amidons cationiques utilisables selon l'invention peuvent consister en des produits amphotères, c'est-à-dire en des produits qui sont à la fois cationiques et anioniques. Les substituants anioniques peuvent, à titre d'exemples, être choisis dans le groupe comprenant les groupements phosphates, phosphonates, sulfates, sulfoalkyles, carboxyalkyles et sulfocarboxyles. De tels substituants sont, entre autres, décrits au niveau du brevet EP-B1-282.415 susmentionné.

Lesdits amidons, d'origine naturelle ou hybride, peuvent être à base de pomme de terre, de pomme de terre à haute teneur en amylopectine (fécule waxy), de maïs, de blé, de maïs à haute teneur en amylopectine (maïs waxy), de maïs à haute teneur en amylose, de riz, de pois ou de manioc, à base des coupes ou fractions qui peuvent en être faites ou obtenues telles que l'amylose, l'amylopectine, les coupes granulométriques connues de l'homme de l'art sous les vocables d'amidon de blé "A" et amidon de blé "B", et les mélanges quelconques d'au moins deux quelconques des produits susmentionnés.

A ce titre, l'amidon cationique utilisable au niveau de la composition de collage du papier et du carton selon l'invention peut notamment être constitué d'un mélange d'au moins un amidon de tubercule cationique, en particulier de fécule de pomme de terre cationique et d'au moins un amidon de céréale cationique, en particulier de maïs ou de blé cationique.

On peut notamment mettre en oeuvre des mélanges présentant des rapports pondéraux fécule de pomme de terre cationique / amidon de blé ou de maïs cationique allant d'environ 10/90 à environ 90/10, et notamment de 20/80 à 80/20, étant entendu que la cationisation peut avoir été opérée, comme décrit au niveau du brevet EP-B-139.597 au nom de la Demanderesse, sur le mélange des deux amidons ou, de façon séparée, sur chacun des deux amidons, lesquels sont ensuite mélangés.

Les amidons cationiques (y compris amphotères) utilisés dans la composition de collage selon l'invention, peuvent avoir été soumis à un traitement chimique et/ou physique quelconque, simultanément, antérieurement ou postérieurement à la cationisation.

De préférence, un tel traitement éventuel, par exemple de réticulation, d'oxydation, de traitement alcalin, de traitement thermique, d'hydrolyse acide et/ou enzymatique ou de plastification, est opéré postérieurement à l'étape de cationisation ou d'"amphotérisation" (en combinant cationisation et anionisation).

La Société Demanderesse a trouvé, notamment quand la composition de collage selon l'invention devait être utilisée pour le collage externe du papier ou du carton, qu'il pouvait être avantageux, après cationisation (ou amphotérisation), de fluidifier, notamment par hydrolyse acide et/ou hydrolyse enzymatique, l'amidon cationique (ou amphotère) obtenu et ce, de telle sorte que celui-ci présente une fluidité dans l'eau ("water fluidity" ou "WF") d'environ 50 à environ 80. Une telle fluidification, par exemple par mise en oeuvre d'acide chlorhydrique, est, de manière générale, opérée avant l'étape d'estérification de l'amidon (cationique ou amphotère) par l'anhydride d'acide dicarboxylique particulier utilisé conformément à l'invention.

Ladite étape d'estérification se fait de manière connue en soi, si ce n'est que l'on met en oeuvre, conformément à l'invention, des anhydrides d'acide dicarboxylique (par exemple l'anhydride tétrapropénylsuccinique ou ses isomères) qui, à la connaissance de la Société Demanderesse, n'ont jamais été utilisés jusqu'alors pour estérifier un quelconque polysaccharide cationique, en particulier un quelconque amidon ou dérivé d'amidon cationique ou amphotère.

D'une manière générale, on met en oeuvre un lait d'amidon, éventuellement fluidifié, cationique présentant une matière sèche (MS) d'environ 30 % environ 40 %, une température d'environ 20°C à environ 50°C et un pH de l'ordre de 7,0-9,0. On ajoute au milieu environ 1 % à environ 8 %, en poids par rapport au poids sec d'amidon contenu dans le lait amylacé, d'au moins un anhydride d'acide dicarboxylique substitué par une chaîne carbonée de structure ramifiée. La réaction d'estérification est menée pendant une durée d'environ 1 h à environ 24 h et ce, dans un milieu réactionnel dont les température et pH sont maintenus dans les gammes respectives précitées. La durée de réaction dépend, notamment, du taux d'anhydride mis en oeuvre et du niveau d'estérification souhaité. L'amidon disubstitué obtenu est, après rectification du milieu à un pH de l'ordre de 4,0 à 8,0, lavé, séché puis éventuellement broyé.

En suite de quoi une composition préférentielle de collage selon l'invention est caractérisée en ce que le polysaccharide cationique consiste en un amidon cationique contenant :
a) un taux d'azote fixé d'environ 0,05 % à environ 1,5 %, de préférence de 0,05 % à 1,0 %, et plus préférentiellement encore de 0,09 % à 1,0 %, exprimé sur le poids sec de l'amidon, et/ou
b) un taux d'anhydride(s) d'acide dicarboxylique substitué(s) par une chaîne carbonée, saturée ou non, de structure ramifiée, d'environ 1,0 % à environ 5 %, exprimé en poids total d'anhydride(s) sur le poids total d'amidon.

Selon une variante préférentielle du procédé de préparation de la composition pour collage du papier et du carton selon l'invention, on met en oeuvre postérieurement à l'étape d'estérification du polysaccharide cationique, en particulier d'un amidon cationique, faiblement ou non fluidifié, une étape supplémentaire d'adjonction d'un agent oxydant permettant, entre autres, lors de la cuisson ultérieure de la composition en vue de solubiliser le polysaccharide, d'atteindre la viscosité de colle souhaitée par le papetier, ladite viscosité pouvant en effet, dans certains cas, ne pas être totalement atteinte de par le seul traitement de cuisson ultérieur.

Par agent oxydant, on entend et ce, sans que cette liste ne soit limitative, un produit choisi dans le groupe comprenant les persulfates, les hypochlorites, les peroxydes, les perborates et les bromates, ledit agent oxydant consistant, de préférence, en un persulfate, en particulier du persulfate de sodium ou d'ammonium. De manière générale, lorsqu'il est mis en oeuvre, l'agent oxydant représente d'environ 0,05 % à environ 1,0 %, en particulier de 0,1 % à 0,5 %, en poids du polysaccharide cationique estérifié contenu dans la composition.

Il convient de noter que l'étape éventuelle d'adjonction d'un agent oxydant, ladite étape étant postérieure aux étapes de cationisation et d'estérification par anhydride d'acide dicarboxylique, peut être opérée à tout moment avant, voire pendant, l'étape de cuisson de la composition pour collage.

A titre purement indicatif, cette adjonction peut avoir lieu aussi bien chez le fournisseur de la composition pour collage que chez le fabricant de papier ou de carton. Dans ce dernier cas, l'agent oxydant peut être ajouté, en tout ou partie, avant et/ou pendant l'étape de cuisson.

En suite de quoi, de façon préférentielle, la composition pour collage du papier et du carton selon l'invention est caractérisée en ce qu'elle contient, en outre, au moins un agent oxydant choisi dans le groupe comprenant les persulfates, les hypochlorites, les peroxydes, les perborates et les bromates, de préférence au moins un persulfate.

La cuisson de ladite composition est réalisée de manière connue en soi, par cuisson discontinue, par exemple en cuve ouverte à des températures inférieures à 100°C, ou par cuisson continue, par exemple à des températures de 100 à 150°C dans un cuiseur continu sous pression ou "jet cooker", propre à assurer les opérations de dosage, de cuisson et de dilution. Selon notamment les caractéristiques de l'équipement de cuisson utilisé, la nature et la concentration de chacun des constituants de la composition pour collage, et la viscosité de colle recherchée par le papetier, le temps de cuisson sera, en pratique, de l'ordre de quelques secondes à 5 mn environ.

La composition pour le collage du papier et du carton selon l'invention peut contenir, outre au moins un polysaccharide cationique estérifié par un anhydride d'acide dicarboxylique substitué par une chaîne carbonée, saturée ou non, de structure ramifiée, l'un ou l'autre des produits communément utilisés pour le collage, notamment le collage externe (surfaçage), de feuilles ou autres structures planes fibreuses.

Ces produits incluent et ce, sans que cette liste ne soit limitative, les pigments, les charges (en particulier les charges de faible granulométrie), les agents de collage (en particulier de type anhydride alcénylsuccinique ou dimère de cétène), les sels d'aluminium, les colorants, les azurants optiques, les lubrifiants et les agents anti-mousse.

D'un autre côté, la composition pour collage du papier et du carton selon l'invention peut être mise en oeuvre au moyen de toute technique connue de collage, en particulier de collage externe ou surfaçage. Ces techniques peuvent faire appel à des dispositifs de type presse à coller, cuve, applicateur à rouleau, calandreuse, coucheuse, etc...

De telles techniques et de tels dispositifs sont notamment décrits au niveau de la page 4, lignes 17-26 de la demande de brevet EP-A-350.668 susmentionnée.

On peut notamment utiliser la composition selon l'invention sur les dispositifs de collage les plus sophistiqués et performants disponibles sur le marché, en particulier sur ceux connus de l'homme de l'art sous les vocables de "size-press" et de "film-press".

En suite de quoi la présente invention a également pour objet un nouveau procédé pour le collage, en particulier pour le collage externe, du papier et du carton, caractérisé en ce que l'on applique, en tant que composition de collage, une composition contenant un polysaccharide cationique estérifié par un anhydride d'acide dicarboxylique substitué par une chaîne carbonée, saturée ou non, de structure ramifiée. Ladite composition peut, dans le cadre dudit procédé, présenter l'une ou l'autre des caractéristiques préférentielles évoquées précédemment.

A titre d'exemple, ce procédé peut, de manière générale, être valablement appliqué au collage, en particulier au collage externe, de tout papier pour impression et/ou écriture.

Comme déjà indiqué et comme il résulte des exemples décrits ci-après, le procédé de collage selon l'invention peut avantageusement être appliqué au collage externe de papiers pour enveloppes et de papiers pour impression, en particulier pour impression sans impact et tout particulièrement pour impression jet d'encre.

Il convient de signaler à cet endroit de la description que les polysaccharides cationiques particuliers, c'est-à-dire estérifiés par des dérivés d'anhydrides d'acide dicarboxylique "ramifiés", utilisés dans la composition et le procédé'pour collage du papier et du carton selon l'invention constituent des produits nouveaux, applicables industriellement, et impliquant une activité inventive indiscutable.

En effet, la Société Demanderesse a notamment trouvé que, de façon surprenante et inattendue, ces polysaccharides cationiques particuliers étaient non seulement plus performants en collage que les polysaccharides cationiques estérifiés par des dérivés d'anhydrides d'acide dicarboxylique linéaires revendiqués au niveau de la demande EP 620.315 précitée (et ce, y compris à nombre d'atomes de carbone égal au niveau desdits dérivés), mais encore que ces polysaccharides particuliers :
- pouvaient être préparés, stockés, transportés et/ou manipulés dans des conditions au moins aussi aisées, voire meilleures, que les polysaccharides cationiques revendiqués dans cette demande EP-A-620.315,
- pouvaient être valablement utilisés dans d'autres domaines d'application que le seul collage du papier/carton et notamment en vue de la préparation de compositions de couchage du papier/carton, de compositions de collage de structures planes (fibreuses ou non fibreuses) autres que le papier carton, d'adhésifs en général, de surfactants, d'agents émulsifiants, d'agents lubrifiants, d'agents hydrofugeants, d'agents floculants, d'agents viscosifiants, d'agents d'encapsulation, de matériaux thermoplastiques, de produits capillaires ou de compositions détergentes.

En suite de quoi la présente invention a également pour objet, en tant que produit nouveau, un polysaccharide cationique, en particulier un amidon cationique, estérifié par un anhydride d'acide dicarboxylique substitué par une chaîne carbonée, saturée ou non, de structure ramifiée.

Selon une autre variante préférentielle, l'invention a pour objet un amidon cationique estérifié par un anhydryde d'acide dicarboxylique substitué par une chaîne carbonée de structure ramifiée, choisi parmi l'anhydride tétrapropénylsuccinique, l'anhydride iso-décénylsuccinique ou l'un quelconque de leurs isomères respectifs.

Les modalités de préparation et caractéristiques, générales ou préférentielles, de tels nouveaux produits ont été décrites précédemment.

L'invention pourra être encore mieux comprise à l'aide des exemples qui suivent et qui font état de certains modes particulièrement avantageux de préparation et d'utilisation des polysaccharides cationiques et des compositions de collage selon l'invention.

### EXEMPLE 1

### PREPARATION DE POLYSACCHARIDES CATIONIQUES CONFORMES OU NON A L'INVENTION

Dans le cadre de cet exemple, on décrit la préparation de différents polysaccharides cationiques selon l'invention (PRODUITS A à D), en l'occurrence d'amidons cationiques estérifiés par un anhydride d'acide dicarboxylique substitué par une chaîne carbonée de structure ramifiée.

On décrit également la préparation de polysaccharides cationiques "témoins" non conformes à l'invention (PRODUITS T1, T2 et T3).

### A) PRODUIT A

### 1) Cationisation / fluidification

On prépare un lait d'amidon de maïs à 32 % de matière sèche (MS), présentant une température de 39°C, auquel on ajoute 2 % de chaux (ce pourcentage étant exprimé en poids sec de chaux/poids d'amidon) puis 1,9 % de chlorure de 3-chloro-2(hydroxypropyl)-triméthylammonium pur (exprimé en poids/poids d'amidon). Le pH de réaction est de 12,0 environ et la durée de réaction à 39°C de 11 heures. Le pH du milieu réactionnel est ensuite abaissé à une valeur de 3,0 environ par addition d'acide chlorhydrique (solution de HCl à 33 %), puis la température du milieu réactionnel est portée à 51°C.

On ajoute ensuite 0,5 % de HCl, exprimé en poids sec/poids d'amidon. On suit la fluidification de l'amidon cationique par mesure de la fluidité dans l'eau ("Water Fluidity" ou "WF") dudit amidon.

On arrête la fluidification quand l'amidon cationique ainsi fluidifié par hydrolyse acide présente un WF de l'ordre de 55-62 et ce, par mise en oeuvre de carbonate de sodium (Na₂CO₃) et obtention d'un pH de 5,0-5,5.

L'amidon cationique fluidifié ainsi obtenu est ensuite lavé. Son pH est amené à 8,8 environ avec Na₂CO₃. En dernier lieu, on sèche le produit de sorte que celui-ci contienne environ 13 % en poids d'eau.

Le polysaccharide cationique fluidifié obtenu présente un taux d'azote fixé de l'ordre de 0,12 % exprimé sur le poids sec d'amidon.

### 2) Estérification par l'anhydride tétrapropényl succinique (ATPS)

A partir du produit séché obtenu selon l'étape 1), on réalise un lait d'amidon cationique fluidifié à 32 % de MS et ce, à une température d'environ 30°C.

On ajoute de l'eau oxygénée H₂O₂ jusqu'à ce que le milieu soit légèrement oxydant, puis on ajuste le pH à 8,0. On incorpore ensuite, en 3 heures, 3 % d'anhydride tétrapropénylsuccinique (ATPS), ce pourcentage étant exprimé en poids/poids d'amidon, tout en maintenant le pH du milieu réactionnel à une valeur de 8,0 par addition de soude (NaOH).

On laisse réagir pendant 4 heures à ce même pH. On abaisse ensuite le pH du milieu à environ 6,5 (solution de HCl à 33 %). Le produit obtenu, à savoir un amidon cationique fluidifié substitué par 3 % en poids d'ATPS, est ensuite lavé, essoré, séché sur lit fluidisé (teneur en eau d'environ 13 %).

### B) PRODUIT B

Le protocole d'obtention du PRODUIT B est identique à celui décrit pour le PRODUIT A si ce n'est que le polysaccharide cationique devant être estérifié par 3 % d'ATPS est un amidon de maïs cationique fluidifié présentant un taux d'azote fixé de 0,10 % en poids et une fluidité dans l'eau (WF) supérieure à celle du PRODUIT A, à savoir de l'ordre de 72-78 (au lieu de 55-62).

### C) PRODUIT C

Le protocole d'obtention du PRODUIT C est identique à celui décrit pour le PRODUIT A, si ce n'est qu'après estérification par ATPS, on ajoute à la composition amylacée 0,1 % en poids de persulfate d'ammonium, exprimé en poids d'amidon fluidifié disubstitué.

### D) PRODUIT D

Le protocole d'obtention du PRODUIT D est identique à celui du produit C si ce n'est que l'on met en oeuvre, après double substitution (cationisation / estérification ATPS), 0,3 % en poids de persulfate d'ammonium.

### E) PRODUIT T1 (NON CONFORME A L'INVENTION)

Le protocole d'obtention du PRODUIT T1 est identique à celui décrit pour le PRODUIT A si ce n'est que l'amidon cationique fluidifié obtenu à l'issu de l'étape 1) n'est soumis à aucune étape d'estérification par un quelconque anhydride.

Le PRODUIT T1 est donc un polysaccharide monosubstitué, en l'occurrence uniquement substitué par des groupements cationiques.

### F) PRODUIT T2 (NON CONFORME A L'INVENTION)

Le protocole d'obtention du PRODUIT T2 est identique au protocole décrit pour le PRODUIT A si ce n'est que :
1) l'amidon cationique fluidifié devant être estérifié présente un taux d'azote fixé de 0,21 % et une fluidité (WF) se situant entre 62-68,
2) et surtout que l'amidon cationique fluidifié est estérifié, comme préconisé dans la demande de brevet EP-A-620.315 susmentionnée, par l'anhydride n-octénylsuccinique, c'est-à-dire par un anhydride substitué par une chaîne carbonée linéaire.

### G) PRODUIT T3 (NON CONFORME A L'INVENTION)

Le protocole d'obtention du PRODUIT T3 est identique au protocole décrit pour le PRODUIT A si ce n'est que l'amidon cationique fluidifié (taux d'azote fixé : 0,12 %, WF de 55-62) est estérifié par un anhydride substitué par une chaîne carbonée linéaire à 12 atomes de carbone, en l'occurrence estérifié par l'anhydride n-dodécénylsuccinique (ou "n-DDSA"). On notera que la mise en oeuvre du n-DDSA est plus difficile du fait que le produit se présente sous la forme d'un produit solide pâteux à température ambiante.

### EXEMPLE 2

### PREPARATION DE COMPOSITIONS POUR COLLAGE

Dans le cadre de cet exemple, chacun des PRODUITS A à D (polysaccharides conformes à l'invention) et des polysaccharides cationiques "témoins" (PRODUITS T1, T2 et T3) est mis sous forme de dispersion aqueuse présentant une matière sèche (MS) de l'ordre de 10,5-12 %.

Les dispersions obtenues sont ensuite soumises à un traitement thermique dans un cuiseur discontinu de type "cuve ouverte" et ce, pendant 15 minutes à 95-98°C, de façon à solubiliser l'amidon.

On obtient ainsi :
- à partir respectivement des PRODUITS A à D, les COMPOSITIONS A à D (compositions de collage selon l'invention), et
- à partir respectivement des PRODUITS T1, T2 et T3, les COMPOSITIONS T1, T2 et T3 (compositions de collage non conformes à l'invention).

En outre, on soumet au même traitement thermique en cuiseur continu, une dispersion à 11 % de MS préparée à partir d'un mélange de PRODUIT T1 (amidon cationique non estérifié) et de 10 %, par rapport au poids d'amidon, de gomme guar anionique fluidifiée d'appellation "MEYPRO-FILM 222" commercialisée par MEYALL CHEMICAL AG.

La composition de collage obtenue, non conforme à l'invention, est dénommée "COMPOSITION T4".

Par ailleurs, on soumet une dispersion aqueuse à 12 % de MS de PRODUIT B à un traitement thermique dans un cuiseur en continu de type "jet-cooker" et ce, pendant 26 secondes à 145°C.

La composition de collage obtenue, conforme à l'invention, est dénommée ci-après COMPOSITION B2.

On mesure, comme dans la demande de brevet EP-A-620.315, la viscosité BROOKFIELD à 60°C (vitesse : 100 tours/minute) de chacune des compositions de collage ainsi préparées.

Les compositions conformes à l'invention présentent les viscosités ci-après, exprimées en m Pa.s ou centipoises :
. COMPOSITION A : 240 m Pa.s
. COMPOSITION B : 180 m Pa.s
. COMPOSITION B2 : 120 m Pa.s
. COMPOSITION C : 200 m Pa.s
. COMPOSITION D : 92 m Pa.s

Les compositions non conformes à l'invention présentent les viscosités ci-après :
. COMPOSITION T1 : 120 m Pa.s
. COMPOSITION T2 : 96 m Pa.s
. COMPOSITION T3 : 135 m Pa.s
. COMPOSITION T4 : 144 m Pa.s

### EXEMPLE 3

### MISE EN OEUVRE DES COMPOSITIONS POUR LE COLLAGE DU PAPIER

Dans le cadre de cet exemple, on décrit les conditions de mise en oeuvre des compositions de collage, conformes ou non à l'invention, en vue du collage externe (ou surfaçage) du papier.

Le papier utilisé est un papier sans bois de type impression/écriture présentant un grammage de 78 g/m2, un taux de cendres de 24 % (à 450°C) et une porosité BENDTSEN de 1330 ml/minute. La dépose de chacune des compositions sur ledit papier se fait à un taux de l'ordre de 4 g/m2 et ce, par mise en oeuvre d'une coucheuse de laboratoire avec presse à coller ("size-press").

### EXEMPLE 4

### POROSITE DES PAPIERS OBTENUS AVEC LES COMPOSITIONS DE COLLAGE

On évalue la porosité des papiers surfacés obtenus et d'un papier "témoin" non surfacé, au moyen d'un appareil d'essai BENDTSEN Modèle V avec indicateur direct de porosité.

La porosité est exprimée en ml d'air/minute, étant entendu que plus ce volume d'air est élevé, plus la porosité du papier est importante et moins ledit papier est "fermé" et globalement applicable à l'impression et/ou l'écriture.

Le papier témoin, non collé, présente, comme indiqué ci-avant, une porosité BENDTSEN de 1330 ml/min.

Le même papier, surfacé respectivement par l'une ou l'autre des compositions selon l'invention A à D (y compris B2) et non conformes à l'invention T1 à T4, présente la porosité ci-après :
. avec COMPOSITION A : 80 ml/min
. avec COMPOSITION B : 35 ml/min
. avec COMPOSITION B2 : 140 ml/min
. avec COMPOSITION C : 55 ml/min
. avec COMPOSITION D : 130 ml/min
. avec COMPOSITION T1 : 650 ml/min
. avec COMPOSITION T2 : 300 ml/min
. avec COMPOSITION T3 : 350 ml/min
. avec COMPOSITION T4 : 460 ml/min

Ces résultats montrent que les COMPOSITIONS A à D selon l'invention permettent d'obtenir des porosités très significativement abaissées par rapport à celles obtenues avec les COMPOSITIONS T2 et T3 telles que préconisées dans la demande EP 620.315 susmentionnée.

Il est, entre autres, remarquable de noter que le PRODUIT A contenu dans la COMPOSITION A, à savoir un polysaccharide cationique estérifié par un anhydride substitué par une chaîne carbonée à 12 atomes de carbone de structure ramifiée est beaucoup plus performant que le PRODUIT T3 préparé de la même façon que ledit PRODUIT A si ce n'est que le PRODUIT T3 est estérifié par un anhydride substitué par une chaîne carbonée, comportant également 12 atomes de carbone, mais de structure linéaire.

De telles performances des polysaccharides cationiques et compositions de collage selon l'invention étaient insoupçonnables et illustrent parfaitement l'intérêt industriel que l'on peut en attendre dans le cadre de leur utilisation en vue d'abaisser la porosité de structures planes ou feuilles de type "carton" ou "papier", en particulier de papiers pour impression et/ou écriture tels que les papiers pour enveloppes.

### EXEMPLE 5

### QUALITE D'IMPRESSION JET D'ENCRE COULEUR OBTENUE AVEC LES COMPOSITIONS DE COLLAGE

Dans le cadre de cet exemple, on évalue la qualité d'impression jet d'encre couleur des papiers surfacés obtenus après mise en oeuvre respectivement de chacune des compositions de collage A à D selon l'invention et T1 à T4 non conformes à l'invention.

Le test d'impression se fait sur une imprimante jet d'encre couleur de type "HP 560" commercialisée par HEWLETT PACKARD. Les papiers sont imprimés selon le programme informatisé du test IV intitulé "Paper Acceptance Criteria for HEWLETT PACKARD DESKJET 500 C".

Dans le cas présent, on évalue plus particulièrement le critère très sélectif de la qualité de l'impression rendue pour les couleurs noire et jaune et notamment le contraste et la netteté des contours des zones ainsi colorées et le degré de fusion éventuelle des colorants noir et jaune ("bleeding").

Cette évaluation permet de dresser le classement suivant des papiers surfacés et ce, par ordre décroissant de qualité d'impression jet d'encre couleur.
1 - papiers surfacés avec COMPOSITIONS B ou B2
2 - papiers surfacés avec COMPOSITIONS A ou C
3 - papiers surfacés avec COMPOSITIONS D ou T3
4 - papier surfacé avec COMPOSITION T2
5 - papier surfacé avec COMPOSITION T1
6 - papier surfacé avec COMPOSITION T4

Ces résultats montrent que les compositions de collage selon l'invention permettent généralement d'atteindre une qualité en impression jet d'encre couleur supérieure à celle obtenue avec les compositions préconisées par la demande de brevet EP 620.315 susmentionnée. Les compositions A à D selon l'invention se sont notamment toutes révélées, pour ce test d'impression, plus performantes que la COMPOSITION T2, laquelle contient le polysaccharide cationique (PRODUIT T2) plus particulièrement décrit et revendiqué dans la susdite demande.

D'autres essais de collage externe ont été réalisés sur des compositions (colles) contenant l'un ou l'autre des deux amidons cationiques selon l'invention ci-après :
1) amidon de maïs cationique (taux d'azote fixé ≃ 0,14 %), fluidifié (WF ≃ 60) et estérifié par 1,2 % environ d'anhydride tétrapropénylsuccinique ("ATPS"),
2) amidon de maïs cationique (taux d'azote fixé ≃ 0,14 %), fluidifié (WF ≃ 5) et estérifié par 1,2 % environ d'anhydride iso-dodécénylsuccinique ("AIDS").

Les colles ont été obtenues à partir de dispersions aqueuses à 11-12 % MS, ayant subi un traitement thermique sur "jet-cooker' à 140°C pendant 3 minutes.

Les résultats de ces essais ont globalement montré qu'un amidon cationique selon l'invention, estérifié par l'AIDS était aussi performant (porosité, qualité d'impression jet d'encre) qu'un amidon cationique selon l'invention, traité par ATPS.

### EXEMPLE 6

### UTILISATION D'UN POLYSACCHARIDE CATIONIQUE SELON L'INVENTION COMME AGENT EMULSIFIANT

Dans le cadre de cet exemple, on étudie les propriétés émulsifiantes d'un polysaccharide cationique selon l'invention, en l'occurrence le PRODUIT A décrit au niveau de l'EXEMPLE 1.

Dans le cas présent, ces propriétés sont mises en valeur dans le domaine de la préparation de lubrifiants pour la déformation à froid des métaux et notamment le formage de tôles.

Dans ce domaine, il est parfois difficile de proposer des lubrifiants homogènes, notamment se présentant sous forme de pâtes, présentant de forts pourcentages (par exemple supérieurs à 20, voire 30 % en poids) en stéarate de sodium ou de calcium.

La mise en oeuvre du PRODUIT A selon l'invention permet d'atteindre de tels niveaux d'introduction en stéarate comme décrit ci-après.

Dans un malaxeur de laboratoire d'une capacité de 0,8 1 commercialisé par la Société KUSTNER FRERES S.A., on introduit 200 g d'une colle à 6 % de MS de PRODUIT A, ladite colle ayant été obtenue en cuve ouverte à 95°C comme décrit au niveau de l'EXEMPLE 2 et ayant été neutralisée à pH 7 avec de la chaux. On introduit ensuite 50 g de stéarate de calcium. Après 20 minutes de malaxage, le mélange, qui était originellement hétérogène, se présente sous une forme parfaitement homogène. Cette composition intermédiaire est ensuite mise en présence de 50 g, à nouveau, de stéarate de calcium. Après 20 minutes de malaxage, on obtient une composition pâteuse également parfaitement homogène et contenant donc 33 % en poids de stéarate.

Il en résulte que le PRODUIT A conforme à l'invention se révèle être un agent émulsifiant particulièrement apte à la mise en suspension d'un stéarate et à l'obtention d'un lubrifiant homogène contenant une quantité élevée dudit stéarate.

L'excellente fonction émulsifiante du PRODUIT A ainsi mise en exergue peut bien évidemment être mise à profit pour la préparation de divers agents émulsifiants ou lubrifiants utiles à d'autres applications que la déformation des métaux.

### EXEMPLE 7

### UTILISATION D'UN POLYSACCHARIDE CATIONIQUE SELON L'INVENTION POUR LE COLLAGE INTERNE DE PAPIER

Dans le cadre de cet exemple, on étudie l'intérêt d'un polysaccharide cationique selon l'invention en tant qu'agent de collage interne du papier, également appelé "agent de masse".

Le polysaccharide cationique selon l'invention envisagé ici consiste en un amidon de maïs cationique (taux d'azote fixé ≃ 0,38 %), non fluidifié, et estérifié par 1,2 % environ d'anhydride tétrapropénylsuccinique ("ATPS"). Il est désigné par "PRODUIT E".

Le polysaccharide cationique "témoin" ici envisagé consiste en un amidon de maïs cationique (taux d'azote fixé ≃ 0,38 %), non fluidifié et non estérifié. Il est désigné par "PRODUIT T5".

On prépare une masse fibreuse contenant un mélange d'une pâte à la soude à base de fibres longues et d'une pâte à la soude à base de fibres courtes, à laquelle on ajoute de l'eau potable de sorte que la concentration de la pâte résultante soit de 6 g/l environ.

On y ajoute ensuite 35 % en poids de carbonate de calcium (CaCO₃) de sorte que la concentration de la pâte ainsi chargée se situe à environ 8 g/kg.

A partir de ladite pâte chargée, on reconstitue par dilution dans l'eau potable, une masse fibreuse présentant une concentration de 3 g/kg environ et un taux de cendres inférieur à 30 %.

Dans le cadre de cet exemple, on étudie les performances (taux de rétention en amidon et en charges, taux de rétention totale, cohésion interne) des PRODUITS E et T5.

Ces deux amidons ont été préparés sous forme de colle sur un appareil de cuisson en continu dans les conditions suivantes :
- lait à 10 % de matières sèches (MS),
- température de cuisson : 120°C,
- durée de cuisson : 20 secondes,
- dilution en ligne : 700 l/heure.

Ces compositions à base d'amidon cationique conforme ou non à l'invention, sont testées en tant qu'additifs de "masse", sur une "formette de rétention automatisée" TECHPAP.

La mise en oeuvre, pour ces tests, est réalisée à raison de 1,5 % d'amidon cationique sec par rapport à la teneur en matières sèches (MS) de la pâte.

Le temps de contact entre l'additif cationique et la pâte est de 4 minutes.

Pour chacune des colles à base des PRODUITS E et T5, on mesure les paramètres ci-après :
- taux de rétention d'amidon ou "RA" en %,
- taux de rétention totale ou "RT" en %,
- taux de rétention de charges ou "RC" en %, et
- cohésion interne des feuilles obtenues (selon test SCOTT-BOND) ou "Ci" en joules/m² (J/m²).

On obtient les résultats suivants :

| | PRODUIT E | PRODUIT T5 |
|---|---|---|
| RA (%) | 68,9 | 62,3 |
| RT (%) | 79,3 | 79,3 |
| RC (%) | 41,5 | 40,7 |
| CI (J/m²) | 243 | 232 |

Ces résultats montrent que dans l'application ici envisagée (collage interne du papier) un amidon cationique selon l'invention, i.e. estérifié par un anhydride substitué par une chaîne carbonée ramifiée, se révèle globalement plus performant qu'un amidon cationique non estérifié. Rien dans l'art antérieur ne laissait présager de telles performances améliorées en collage interne de par la mise en oeuvre d'un amidon cationique ainsi estérifié.

## Revendications

1. Composition pour le collage du papier et du carton contenant un polysaccharide cationique estérifié par un anhydride d'acide dicarboxylique, caractérisée en ce que ledit anhydride d'acide dicarboxylique est substitué par une chaîne carbonée, saturée ou non, de structure ramifiée.

2. Composition selon la revendication 1, caractérisée en ce que l'anhydride d'acide dicarboxylique est substitué par une chaîne carbonée, saturée ou non, qui est ramifiée en au moins un endroit par au moins un groupement alkyle, de préférence par au moins un groupement alkyle contenant de 1 à 5 atomes de carbone choisi parmi les groupements méthyle, éthyle, n-propyle, isopropyle, n-butyle, isobutyle, sec-butyle, tert-butyle, n-amyle ou isoamyle, et plus préférentiellement encore par au moins un groupement méthyle.

3. Composition selon l'une ou l'autre des revendications 1 et 2, caractérisée en ce que l'anhydride d'acide dicarboxylique est choisi parmi les anhydrides d'acide succinique, maléique, glutarique et phtalique et, de préférence, en ce qu'il consiste en l'anhydride succinique.

4. Composition selon l'une quelconque des revendications 1 à 3, caractérisée en ce que l'anhydride d'acide dicarboxylique est substitué par une chaîne carbonée de structure ramifiée, saturée ou non, comportant de 8 à 16, de préférence de 10 à 12, atomes de carbone et, de façon plus préférentielle encore, en ce qu'il est constitué par l'anhydride tétrapropénylsuccinique, l'anhydride iso-décénylsuccinique ou l'un quelconque de leurs isomères respectifs.

5. Composition selon l'une quelconque des revendications 1 à 4, caractérisée en ce que le polysaccharide cationique consiste en un amidon cationique contenant :
a) un taux d'azote fixé d'environ 0,05 % à environ 1,5 %, de préférence de 0,05 % % à 1,0 %, et plus préférentiellement encore de 0,09 % à 1,0 %, exprimé sur le poids sec de l'amidon, et/ou
b) un taux d'anhydride(s) d'acide dicarboxylique substitué(s) par une chaîne carbonée, saturée ou non, de structure ramifiée, d'environ 1,0 % à environ 5,0 %, exprimé en poids total d'anhydride(s) sur le poids total d'amidon.

6. Composition selon l'une quelconque des revendications 1 à 5, caractérisée en ce qu'elle contient, en outre, au moins un agent oxydant choisi dans le groupe comprenant les persulfates, les hypochlorites, les peroxydes, les perborates et les bromates, de préférence au moins un persulfate.

7. Procédé pour le collage, en particulier le collage externe, du papier et du carton, caractérisé en ce que l'on met en oeuvre une composition de collage selon l'une quelconque des revendications 1 à 6.

8. Procédé de collage selon la revendication 7 appliqué au collage externe de papiers pour impression et/ou écriture, en particulier de papiers pour enveloppes et de papiers pour impression sans impact et tout particulièrement pour impression jet d'encre.

9. Polysaccharide cationique, en particulier amidon cationique, estérifié par un anhydride d'acide dicarboxylique substitué par une chaîne carbonée, saturée ou non, de structure ramifiée.

10. Amidon cationique estérifié par un anhydride d'acide dicarboxylique substitué par une chaîne carbonée de structure ramifiée choisi parmi l'anhydride tétrapropénylsuccinique, l'anhydride iso-décénylsuccinique ou l'un quelconque de leurs isomères respectifs.

11. Utilisation d'un polysaccharide cationique selon la revendication 9 ou d'un amidon cationique selon la revendication 10 en vue de la préparation de compositions pour le collage ou le couchage du papier et du carton, de la préparation de compositions de collage de structures planes fibreuses ou non fibreuses autres que le papier/carton, de la préparation d'adhésifs, de surfactants, d'agents émulsifiants, d'agents lubrifiants, d'agents hydrofugeants, d'agents floculants, d'agents d'encapsulation ou de matériaux thermoplastiques, de produits capillaires ou de compositions détergentes.

## Patentansprüche

1. Zusammensetzung für das Leimen von Papier und Karton, enthaltend ein kationisches Polysaccharid, das durch ein Anhydrid einer Dicarbonsäure verestert ist, dadurch gekennzeichnet, daß das genannte Anhydrid der Dicarbonsäure durch eine gesättigte oder ungesättigte Kohlenstoffkette mit verzweigter Struktur substituiert ist.

2. Zusammensetzung nach Anspruch 1, dadurch gekennzeichnet, daß das Anhydrid der Dicarbonsäure durch eine gesättigte oder ungesättigte Kohlenstoffkette substituiert ist, die an mindestens einer Stelle durch mindestens eine Gruppe Alkyl verzweigt ist, vorzugsweise durch mindestens eine Gruppe Alkyl mit 1 bis 5 Kohlenstoffatomen, ausgewählt unter den Gruppen Methyl, Ethyl, n-Propyl, Isopropyl, n-Butyl, Isobutyl, sek.-Butyl, tert.-Butyl, n-Amyl oder Isoamyl, und ganz besonders durch mindestens eine Gruppe Methyl.

3. Zusammensetzung nach dem einen oder anderen der Ansprüche 1 und 2, dadurch gekennzeichnet, daß das Anhydrid der Dicarbonsäure ausgewählt wird unter den Anhydriden von Bernsteinsäure, Maleinsäure, Glutarsäure und Phthalsäure, und daß es vorzugsweise aus Bernsteinsäureanhydrid besteht.

4. Zusammensetzung nach irgendeinem der Ansprüche 1 bis 3, dadurch gekennzeichnet, daß das Anhydrid der Dicarbonsäure durch eine gesättigte oder ungesättigte Kohlenstoffkette mit verzweigter Struktur substituiert ist, die 8 bis 16, vorzugsweise 10 bis 12 Kohlenstoffatome umfaßt, und in noch mehr bevorzugter Weise dadurch, daß es aus Tetrapropenyl-bernsteinsäureanhydrid, Isodecenyl-bernsteinsäureanhydrid oder irgendeinem von deren jeweiligen Isomeren besteht.

5. Zusammensetzung nach irgendeinem der Ansprüche 1 bis 4, dadurch gekennzeichnet, daß das kationische Polysaccharid aus einer kationischen Stärke besteht, die enthält:
a) einen Gehalt von fixiertem Stickstoff von etwa 0,05 % bis etwa 1,5 %, vorzugsweise von 0,05 % bis 1,0% und noch mehr bevorzugt von 0,09 % bis 1,0 %, ausgedrückt in Trockengewicht Stärke, und/oder
b) einen Gehalt von Anhydrid(en) der Dicarbonsäure, substituiert durch eine gesättigte oder ungesättigte Kohlenstoffkette mit verzweigter Struktur, von etwa 1,0 % bis 5,0 %, ausgedrückt in Gesamtgewicht Anhydrid(e) pro Gesamtgewicht Stärke.

6. Zusammensetzung nach irgendeinem der Ansprüche 1 bis 5, dadurch gekennzeichnet, daß sie außerdem mindestens ein Oxidationsmittel enthält, ausgewählt aus der Gruppe, die umfaßt: die Persulfate, die Hypochlorite, die Peroxide, die Perborate und die Bromate, vorzugsweise mindestens ein Persulfat.

7. Verfahren zum Leimen, insbesondere zum äuβeren Leimen von Papier und Karton, dadurch gekennzeichnet, daß man eine Zusammensetzung für das Leimen nach irgendeinem der Ansprüche 1 bis 6 einsetzt.

8. Verfahren zum Leimen nach Anspruch 7, angewendet zum äußeren Leimen von Papieren durch Bedrucken und/oder Beschriften, insbesondere von Papieren für Umschläge und Papieren für das Bedrucken ohne Eindrückwirkung, und ganz besonders für das Bedrucken mittels Farbstrahl.

9. Kationisches Polysaccharid, insbesondere kationische Stärke, verestert durch ein Anhydrid einer Dicarbonsäure, die durch eine gesättigte oder ungesättigte Kohlenstoffkette mit verzweigter Struktur substituiert ist.

10. Kationische Stärke, verestert durch ein Anhydrid einer Dicarbonsäure, die durch eine Kohlenstoffkette mit verzweigter Struktur substituiert ist, ausgewählt unter Tetrapropenyl-bernsteinsäureanhydrid, Isodecenyl-bernsteinsäureanhydrid oder irgendeinem von deren jeweiligen Isomeren.

11. Verwendung eines kationischen Polysaccharides nach Anspruch 9 oder einer kationischen Stärke nach Anspruch 10 im Hinblick auf die Herstellung von Zusammensetzungen für das Leimen oder das Beschichten von Papier und Karton, die Herstellung von Zusammensetzungen für das Leimen von flachen, faserförmigen oder nicht faserförmigen Strukturen, die anders sind als Papier/Karton, die Herstellung von Haftmitteln, oberflächenaktiven Mitteln, Emulgatoren, Schmiermitteln, wasserabweisenden Mitteln, Flokkungsmitteln, Einkapselungsmitteln oder thermoplastischen Materialien, von Kapillarprodukten oder Detergenz-Zusammensetzungen.

## Claims

1. Composition for sizing paper and board, containing a cationic polysaccharide esterified by a dicarboxylic acid anhydride, wherein the said dicarboxylic acid anhydride is substituted with a carbon chain, saturated or unsaturated, of branched structure.

2. Composition according to Claim 1, wherein the dicarboxylic acid anhydride is substituted with a carbon chain, saturated or unsaturated, branched at at least one site by at least one alkyl group, preferably by at least one alkyl group containing from 1 to 5 carbon atoms selected from the groups methyl, ethyl, n-propyl, isopropyl, n-butyl, isobutyl, sec-butyl, tert-butyl, n-amyl and isoamyl groups, and even more preferably by a methyl group.

3. Composition according to any one of Claims 1 and 2, wherein the dicarboxylic acid anhydride is selected from the group of succinic, maleic, glutaric and phthalic acid anhydrides, preferably succinic anhydride.

4. Composition according to any one of Claims 1 to 3, whrein the dicarboxylic acid anhydride is substituted with a carbon chain of branched structure, saturated or unsaturated, comprising 8 to 16 carbon atoms, preferably 10 to 12 carbon atoms and even more preferably it is constituted by tetrapropenylsuccinic anhydride, iso decenylsuccinic anhydride or any of their respective isomers.

5. Composition according to any one of Claims 1 to 4, wherein the cationic polysaccharide consists of a cationic starch containing:
a) a bound nitrogen level of about 0.05% to about 1.5%, preferably 0.05% to 1.0%, and still more preferably 0.09% to 1.0%, expressed with respect to the dry weight of the starch, and /or
b) a level of dicarboxylic acid anhydride(s) substituted with a carbon chain, saturated or unsaturated, of branched structure, of about 1.0% to about 5.0%, expressed as total weight of anhydride(s) with respect to the total weight of starch.

6. Composition according to any one of Claims 1 to 5, which contains, in addition at least one oxidizing agent selected from the group comprising persulphates, hypochlorites, peroxides, perborates and bromates, preferably at least one persulphate.

7. Process for the sizing, in particular the external sizing, of paper and board, wherein a composition for sizing according to any one of claims 1 to 6, is used.

8. Process for sizing according to Claim 7, applied to the external sizing of printing and/or writing papers, in particular papers for envelopes and papers for impact-free printing and most particularly for inkjet printing.

9. Cationic polysaccharide, in particular cationic starch, esterified by a dicarboxylic acid anhydride substituted with a carbon chain, saturated or unsaturated, of branched structure.

10. Cationic starch esterified by a dicarboxylic acid anhydride substituted with a branched carbon chain structure selected from the group of tetrapropenylsuccinic anhydride, iso decenylsuccinic anhydride or any of their respective isomers.

11. Use of a cationic polysaccharide according to Claim 9 or a cationic starch according to Claim 10, for the preparation of compositions for the sizing or the coating of paper and board, for the preparation of sizing compositions of fibrous or non fibrous plane structures other than paper/board, for the preparation of adhesives, surfactants, emulsifying agents, lubricating agents, hydrophobic agents, floculating agents, encapsulating agents or thermoplastic materials, capillary products or detergent compositions.
